Europäisches Patentamt

European Patent Office

Office européen des brevets

(19)

(11) **EP 0 498 259 B1**

(12) **EUROPÄISCHE PATENTSCHRIFT**

(45) Veröffentlichungstag und Bekanntmachung des Hinweises auf die Patenterteilung:
**27.03.1996 Patentblatt 1996/13**

(51) Int Cl.$^6$: **G21C 3/07**, C22F 1/18

(21) Anmeldenummer: **92101295.1**

(22) Anmeldetag: **27.01.1992**

(54) **Strukturteil für ein Kernreaktorbrennelement und Verfahren zum Herstellen dieses Strukturteiles**

Nuclear reactor fuel assembly component and method for the fabrication of same

Elément des structures pour élement de combustible d'un réacteur nucléaire et méthode pour sa fabrication

(84) Benannte Vertragsstaaten:
**DE ES FR GB SE**

(30) Priorität: **04.02.1991 EP 91101463**
**01.08.1991 EP 91112979**

(43) Veröffentlichungstag der Anmeldung:
**12.08.1992 Patentblatt 1992/33**

(73) Patentinhaber: **SIEMENS AKTIENGESELLSCHAFT**
**D-80333 München (DE)**

(72) Erfinder: **Steinberg, Eckard, Dipl.-Ing. (FH)**
**W-8520 Erlangen (DE)**

(56) Entgegenhaltungen:
**EP-A- 0 085 553       EP-A- 0 171 675**
**EP-A- 0 196 286       EP-A- 0 405 172**
**FR-A- 1 327 734       FR-A- 2 509 510**
**US-A- 4 963 323**

**Beschreibung**

Aus der deutschen Offenlegungsschrift 34 28 954 ist ein Hüllrohr aus einer Zirkoniumlegierung für einen Kernreaktorbrennstab bekannt, das mit Kernbrennstoff gefüllt werden kann. Die Zirkoniumlegierung kann Zircaloy-2 sein mit 1.2 bis 1.7 Gew.-% Zinn, 0.07 bis 0.2 Gew.-% Eisen, 0.05 bis 0.15 Gew.-% Chrom, 0.03 bis 0.08 Gew.-% Nickel, 0.07 bis 0.15 Gew.-% Sauerstoff und dem Rest Zirkonium. Der geometrische Mittelwert der Korndurchmesser dieser Zirkoniumlegierung ist kleiner oder gleich 3μm. Insbesondere beträgt dieser geometrische Mittelwert 2.5 bis 2 μm.

Dieses Hüllrohr soll einen großen Widerstand gegen Spannungsrißkorrosion haben. Bei der Spannungsrißkorrosion handelt es sich um einen Korrosionsmechanismus auf der Innenseite des Hüllrohres im Kernreaktor, für den das Dehnen des Hüllrohres infolge des Schwellens des eingefüllten Kernbrennstoffes und vom Kernbrennstoff freigesetzte Kernspaltprodukte wie Jod verantwortlich sind. Die Spannungsrißkorrosion spielt eine besondere Rolle bei Kernreaktorbrennstäben, die in Siedewasserkernreaktoren eingesetzt sind. Dort können insbesondere abrupte Leistungswechsel des Kernreaktors zum Durchbrechen der Hüllrohrwände der Kernreaktorbrennstäbe infolge Spannungsrißkorrosion führen.

Der Korndurchmesser in einer Zirkoniumlegierung kann nach ASTM (American Society for Testing Materials) Designation E 112-61 bestimmt werden. Der geometrische Mittelwert von n Durchmessern ist als $X^G = (d_1.d_2....d_i.d_n)^{1/n}$ definiert mit $d_i$ = i-ter Durchmesser.

Der Erfindung liegt die Aufgabe zugrunde, ein für ein Kernreaktorbrennelement brauchbares Strukturteil aus einer Zirkoniumlegierung anzugeben, das auch bei relativ hoher Temperatur - wie sie beispielsweise in einem Druckwasserkernreaktor herrscht und die höher als in einem Siedewasserkernreaktor ist - nicht nur eine hohe Korrosionsfestigkeit gegenüber dem Kernbrennstoff bzw. Kernspaltprodukten hat, sondern auch gegenüber dem aus Wasser bestehenden Kühlmittel eines Kernreaktors.

Zur Lösung dieser Aufgabe hat ein Strukturteil erfindungsgemäß die Merkmale des Patentanspruchs 1.

Der Durchmesser von Sekundärphasen - das sind eigenständige Kristallite von in der Zirkoniumlegierung ausgeschiedenen Legierungsbestandteilen - kann entweder mit hoher Genauigkeit mit einem Transmissionselektronenmikroskop oder mit nicht so hoher Genauigkeit mit einem Rasterelektronenmikroskop bestimmt werden. Der geometrische Mittelwert dieser Durchmesser ist genauso definiert wie der geometrische Durchmesser von Korndurchmessern.

Der Rekristallisationsgrad ist der prozentuale Anteil von rekristallisiertem Kristallgefüge in der Zirkoniumlegierung.

Insbesondere der verhältnismäßig geringe Gehalt an Zinn in der Zirkoniumlegierung entsprechend dem Merkmal b) des Patentanspruches 1 und der verhältnismäßig hohe geometrische Mittelwert der Durchmesser der in der Matrix der Zirkoniumlegierung ausgeschiedenen Sekundärphasen nach Merkmal c) bewirken die erhöhte Korrosionsfestigkeit gegenüber Wasser.

Eine noch mehr erhöhte Korrosionsfestigkeit sowohl gegenüber Kernbrennstoff bzw. Kernspaltprodukten als auch gegenüber Wasser bei erhöhter Temperatur läßt sich durch das Merkmal nach Patentanspruch 3 erzielen.

Ein Körper einer Zirkoniumlegierung besitzt eine Textur, wenn die hexagonalen Kristallite dieses Körpers gegenüber einer rein zufälligen (z.B. durch β-Abschrecken nahezu erreichbaren) Ausrichtung eine räumliche, geordnete (z.B. durch mechanische Verformung bewirkbare) Ausrichtung haben.

Ein Maß für die Ausrichtung der Kristallite rechtwinklig zur Oberfläche des aus der Zirkoniumlegierung bestehenden Körpers und damit für die Textur ist der Kearns-Parameter $f_r$, der entsprechend "Metallurgical Transactions A", Volume 10A, April 1979, Seiten 483 bis 487, berechnet werden kann. Die erforderlichen Messungen werden mit Hilfe einer gebündelten Röntgenstrahlung in einem Goniometer durchgeführt.

Mit den Merkmalen nach den Patentansprüchen 4 oder 5 kann eine optimale Korrosionsfestigkeit der Strukturteile aus der Zirkoniumlegierung gegen Wasser bei erhöhter Temperatur erzielt werden.

Die Ansprüche 8 bis 12 sind auf vorteilhafte Verfahren zum Herstellen der Strukturteile nach den Patentansprüchen 1 bis 7 gerichtet.

Die logarithmische Wanddickenänderung $\varepsilon_S$ ist der natürliche Logarithmus des Quotienten $S_o/S$ der Wanddicke eines Rohres vor ($S_o$) und nach ($S$) einem Pilgerschritt. Die logarithmische Durchmesseränderung $\varepsilon_D$ ist der natürliche Logarithmus des Quotienten $D_o/D$ des Mitteldurchmessers (zwischen Innen- und Außendurchmesser) dieses Rohres vor ($D_o$) und nach ($D$) demselben Pilgerschritt. Die durch diesen Pilgerschritt bewirkte logarithmische Formänderung $\varphi$ des Rohres ist durch $\varphi = \varepsilon_S + \varepsilon_D$ definiert, und die diesem Pilgerschritt zugeordnete Kaltverformung $C_W$ beträgt $C_W = 100 \, (1-\exp-\varphi)$ in Prozent.

Der $\alpha$-Bereich einer Zirkoniumlegierung ist der Temperaturbereich, in dem der Kristall der Zirkoniumlegierung eine hexagonale Struktur hat. Der $\beta$-Bereich ist der Temperaturbereich, in dem der Kristall der Zirkoniumlegierung kubisch raumzentrierte Struktur hat. Der $(\alpha + \beta)$-Bereich ist derjenige Temperaturübergangsbereich, in dem beide genannten Kristallstrukturen in der Zirkoniumlegierung vorhanden sind.

Die Erfindung und ihre Vorteile seien anhand der Zeichnung am Beispiel des Herstellens zweier Hüllrohre für einen mit Kernbrennstoff wie z.B. $UO_2$ gefüllten Brennstab für ein Kernreaktorbrennelement näher erläutert:

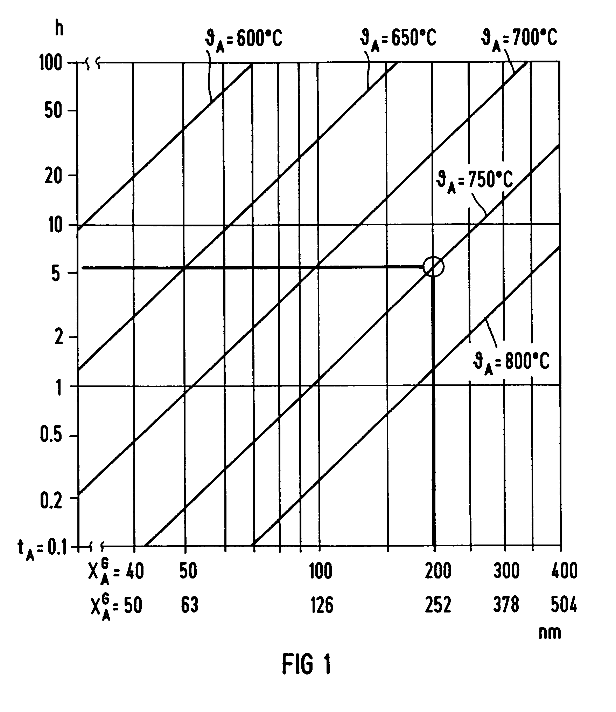

FIG 1 zeigt in einem Diagramm den Zusammenhang von Glühtemperatur $\vartheta_A$ und Glühzeit $t_A$ und den daraus resultierenden geometrischen Mittelwert $X_{A}^{G}$ der Durchmesser der Ausscheidungen von Legierungsbestandteilen nach dem Glühen einer ersten Zirkoniumlegierung Zircaloy-4 (1.2 bis 1.7 Gew.-% Sn, 0.18 bis 0.24 Gew.-% Fe, 0.07 bis 0.13 Gew.-% Cr, 0.10 bis 0.16 Gew.-% Sauerstoff, bis zu 120 ppm Silizium, Rest Zirkonium und unvermeidliche Verunreinigungen; Gew.-% Summe von Fe und Cr: 0.28 bis 0.37 Gew.-%) und einer zweiten Zirkoniumlegierung mit den Legierungsbestandteilen 1 bis 1.2 Gew.-% Sn, 0.35 bis 0.45 Gew.-% Fe, 0.2 bis 0.3 Gew.-% Cr, 0.1 bis 0.18 Gew.-% Sauerstoff und 80 bis 120 ppm Silizium, Rest Zirkonium und unvermeidliche Verunreinigungen.

Im Diagramm nach FIG 1 gilt für den geometrischen Mittelwert $X_{A}^{G}$ der Durchmesser der Ausscheidungen von Legierungsbestandteilen in der betreffenden Zirkoniumlegierung die Beziehung

$$X_{A}^{G} = X_{A\,min}^{G} + \Delta X_{A}^{G} \cdot \frac{1}{1 + \dfrac{1}{k_1 \cdot t_A^{n} \cdot \exp\text{-}Q/RT}}$$

Im Diagramm nach Figur 1 gilt für die erste Zirkoniumlegierung (Zircaloy-4) die obere und für die zweite Zirkoniumlegierung die untere Abszissenskala.

Die obige Beziehung wurde für die beiden Zirkoniumlegierungen empirisch gewonnen durch Bestimmen der geometrischen Mittelwerte der Durchmesser von Ausscheidungen von Legierungsbestandteilen in Versuchskörpern jeweils aus diesen beiden Zirkoniumlegierungen. Diese Versuchskörper wurden zunächst auf eine Temperatur von 1150 °C aufgeheizt und anschließend mit Wasser abgeschreckt. Nach diesem β-Abschrecken ist der größte Teil der Legierungsbestandteile Eisen und Chrom in feinverteilter Form ausgeschieden. Es wurde ein geometrischer Mittelwert der Durchmesser der Ausscheidungen in den Versuchskörpern von $X_{A\,min}^{G}$ = 20 nm gefunden. Sodann wurden die einzelnen Versuchskörper verschiedene Glühzeiten lang verschiedenen Glühtemperaturen ausgesetzt. Nach dem Abkühlen wurden die geometrischen Mittelwerte der Durchmesser der Ausscheidungen für jeden Versuchskörper bestimmt. Dieser geometrische Mittelwert ist umso größer, je höher die Glühtemperatur bzw. die Glühzeit für den betreffenden Versuchskörper war. Dieser geometrische Mittelwert ist aber durch die relativ geringe Menge der Legierungsbestandteile Eisen und Chrom in den betreffenden Versuchskörpern nach oben begrenzt. Diese Begrenzung ist für die erste Zirkoniumlegierung durch die Konstante $\Delta X_{A}^{G}$ = 1000 nm und für die zweite Zirkoniumlegierung durch die Konstante $\Delta X_{A}^{G}$ = 1260 nm in der oben angegebenen Beziehung berücksichtigt. In dieser Beziehung sind ferner $k_1$ = 0.47 x $10^{-7}$ pro Stunde; n =

0.57, die Aktivierungstemperatur Q/R = 18240 K (R = allgemeine Gaskonstante) und T = $\vartheta_A$ + 273 K.

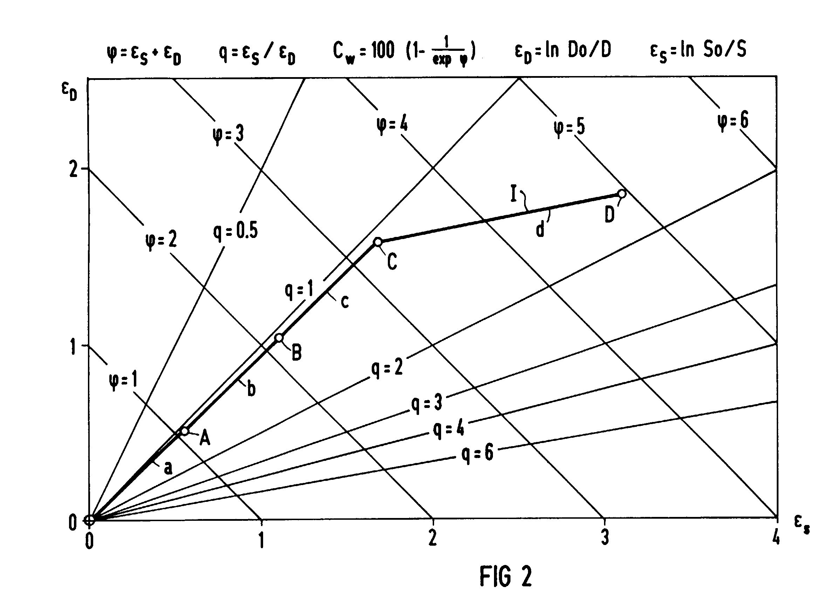

FIG 2 zeigt in einem Diagramm den Zusammenhang von logarithmischer Durchmesseränderung $\varepsilon_D$, logarithmischer Wanddickenänderung $\varepsilon_S$, logarithmischer Formänderung $\varphi$ und dem Quotienten q= $\varepsilon_S/\varepsilon_D$ beim Herstellen eines Rohres durch Pilgern. Es gelten

$$\varepsilon_S = \frac{\varphi}{1 + \dfrac{1}{q}} \qquad \varepsilon_D = \frac{\varphi}{1 + q}$$

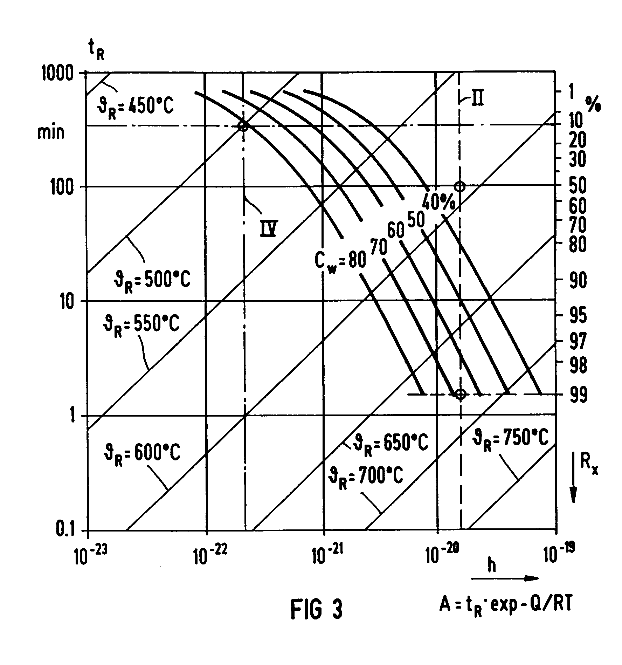

FIG 3 zeigt in einem Diagramm den Zusammenhang von Kaltverformung $C_W$, Glühtemperatur $\vartheta_R$ und Glühzeit $t_R$ und dem daraus resultierenden Rekristallisationsgrad $R_X$ nach dem Glühen des durch Pilgern kaltverformten Rohres aus Zircaloy-4. Der Rekristallisationsgrad $R_X$ ist der prozentuale Anteil des nach dem Glühen rekristallisierten Kristallgefüges. Für den Rekristallisationsgrad $R_X$ gilt die empirisch gewonnene Beziehung

$$\sqrt{\frac{R_x}{1 - R_x}} = k_2 \cdot \varphi^{2} \cdot t_R \cdot \exp\text{-}Q/RT = k_2 \cdot \varphi^{2} \cdot A$$

mit Glühparameter A = $t_R \cdot \exp$ - Q/RT,
mit der Konstanten $k_2$ = 8.3 x $10^{18}$ min $^{-1}$ und der Aktivierungstemperatur Q/R = 40 000 K (R = allgemeine Gaskonstante) und mit
T = $\vartheta_R$ + 273 K (vgl. "Zirconium in the Nuclear Industry"; ASTM Special Technical Publication 824; 1984; S. 106 bis 122).

Ein erster zylinderförmiger massiver Rohkörper aus Zircaloy-4 hat die Legierungszusammensetzung 1.2 Gew.-% Zinn, 0.24 Gew.-% Eisen 0.12 Gew.-% Chrom, 0.15 Gew.-% Sauerstoff, 0.01 Gew.-% Silizium und der Rest Zirkonium mit technisch unvermeidlichen Verunreinigungen und ein zweiter zylinderförmiger massiver Rohkörper die Legierungszusammensetzung 1.1 Gew.-% Zinn, 0.4 Gew.-% Eisen, 0.25 Gew.-% Chrom, 0.14 Gew.-% Sauerstoff, 100 ppm Silizium und der Rest Zirkonium mit technisch unvermeidlichen Verunreinigungen. Für diese beiden Zirkoniumlegierungen reicht der α -Bereich bis etwa 810 °C, der (α+β)-Mischbereich etwa von 810 bis 940 °C, und der β-Bereich beginnt ab etwa 940 °C. Der Durchmesser der Rohkörper beträgt 600 mm.

Beide Rohkörper werden auf eine Temperatur im β-Bereich von 1150 °C erhitzt. Bei dieser Temperatur wird jeder der beiden zylinderförmigen massiven Rohkörper zu einem zylinderförmigen, massiven Ausgangskörper mit einem Durchmesser von 350 mm geschmiedet.

Anschließend werden die beiden Ausgangskörper wieder auf eine Temperatur im β-Bereich von 1150 °C so lange erhitzt, bis sich ausgeschiedene Legierungsbestandteile aufgelöst haben. Sodann wird jeder Ausgangskörper in Wasser mit einer Abschreckrate von 35 K/s an der Oberfläche des Ausgangskörpers beim Temperaturdurchgang durch den (α+β)-Bereich, d.h. durch den Temperaturbereich von 940° bis 810 °C, abgeschreckt. Schließlich läßt man beide Ausgangskörper auf eine Temperatur von etwa 100 °C an der Körperoberfläche abkühlen.

Hierauf werden beide Ausgangskörper zum Ausbilden von Ausscheidungen der Legierungsbestandteile Eisen und Chrom als Sekundärphasen bei einer Temperatur im $\alpha$-Bereich geglüht. Als Glühtemperatur wird für beide Ausgangskörper 750 °C gewählt. Wie dem Diagramm nach FIG 1 entnommen werden kann, beträgt die zugehörige Glühzeit zum Ausbilden der gewünschten Ausscheidungen fünf Stunden. In der Legierung des ersten Ausgangskörpers bilden sich Ausscheidungen der Legierungsbestandteile Eisen und Chrom als Sekundärphasen mit dem geometrischen Mittelwert von 0.2 µm, in der Legierung des zweiten Ausgangskörpers mit dem geometrischen Mittelwert von 0.252 µm aus.

Hierauf werden die beiden Ausgangskörper bei der im $\alpha$-Bereich liegenden Temperatur von 700 °C auf einen Durchmesser von 150 mm warm geschmiedet. Dieses Warmschmieden bei 700 °C kann auch vor dem Ausbilden der Ausscheidungen der Legierungsbestandteile im Ausgangskörper vorgenommen werden.

Nach dem Abkühlen auf Raumtemperatur wird in jedes der beiden entstandenen zylinderförmigen Schmiedestücke unter Ausbildung eines Hohlzylinders ein durchgehendes Loch von 50 mm Durchmesser in axialer Richtung gebohrt. Die Hohlzylinder werden wieder auf eine Temperatur im $\alpha$-Bereich von 700 °C erwärmt und mit einer Zylinderpresse warm extrudiert. Hierbei wird der betreffende Hohlzylinder durch ein zylindrisches Gesenk mit Innendorn gepreßt, und es entsteht ein Rohr mit unverändertem Innendurchmesser von 50 mm und einem Außendurchmesser von 80 mm.

Beide durch Extrusion gewonnenen Rohre werden sodann in eine Pilgermaschine eingesetzt und in vier Pilgerschritten zu einem Fertigrohr mit einem Innendurchmesser von 9.30 mm, einem Außendurchmesser von 10.75 mm und damit mit einer Wandstärke von 0.72 mm gepilgert. Eine Pilgermaschine ist in der US-Patentschrift 4 233 834 beschrieben.

Im Diagramm nach FIG 2 ist der zu diesen vier Pilgerschritten gehörende Pilgerpfad I mit den Pilgerschritten a von O bis A, b von A bis B, c von B bis C und d von C bis D eingetragen. Die logarithmische Formänderung pro Pilgerschritt beträgt bei den ersten drei Pilgerschritten a, b und c jeweils etwa $\varphi_a = \varphi_b = \varphi_c = 1.1$, was einer Kaltverformung $C_{Wa}$ und $C_{Wb}$ und $C_{Wc}$ von etwa 67 % pro Pilgerschritt a oder b oder c entspricht. Beim letzten Pilgerschritt d beträgt die logarithmische Formänderung $\varphi_d = 1.65$, was einer Kaltverformung $C_{Wd}$ von etwa 81 % durch diesen Pilgerschritt d entspricht.

Das Verhältnis $q_a = q_b = q_c$ beträgt für die ersten drei Pilgerschritte a, b und c jeweils etwa 1.1 und für den letzten, den vierten Pilgerschritt d etwa $q_d = 5.5$.

Zwischen jeweils zwei Pilgerschritten wird eine Rekristallisationsglühung praktisch ohne Sekundärrekristallisation durchgeführt. Der Rekristallisationsgrad $R_x$ beträgt beispielsweise 99 %.

Bei diesem Rekristallisationsgrad ergibt sich eine gute Verformbarkeit des Rohres für den folgenden Pilgerschritt.

Dem Diagramm nach FIG 3 kann der für eine Kaltverformung $C_W$ von 67 % und einen Rekristallisationsgrad $R_x$ von 99 % durch die Gerade II gegebene Glühparameter A entnommen werden. Die Schnittpunkte der Geraden II mit den Glühisothermen legen die Glühtemperatur $\vartheta_R$ und die zugehörige Glühzeit $t_R$ fest, die zum Vermeiden von Sekundärrekristallisation bei den Rekristallisationsglühungen zwischen den Pilgerschritten erforderlich sind. Z.B. führen eine Glühtemperatur von 590 °C und eine Glühzeit von 100 Minuten bei einem Zircaloy-4-Rohr mit einer Kaltverformung von 67 % zu einem Rekristallisationsgrad von 99 %. Das Diagramm nach Figur 3 gilt praktisch auch für ein Rohr aus der Zirkoniumlegierung des zweiten Rohkörpers.

Nach dem letzten Pilgerschritt werden beide Rohre mit einer Abschlußglühung spannungsfrei geglüht. Diese hat einen Rekristallisationsgrad von höchstens 10 % zur Folge. In dem Diagramm entsprechend FIG 3 kann der maximale Glühparameter A für eine Kaltverformung von 81 % und einen Rekristallisationsgrad $R_x$ von maximal 10 % entnommen werden. Die Schnittpunkte der Geraden IV mit den Glühisothermen legen die Glühtemperatur $\vartheta_R$ und die zugehörige Glühzeit $t_R$ für eine geeignete Abschlußglühung fest. Z.B. führen eine Glühtemperatur von 500 °C und eine zugehörige Glühzeit von 400 Minuten zu dem Rekristallisationsgrad $R_x = 10$ %.

Die beiden so gewonnenen Fertigrohre haben eine Textur mit dem Kearns-Parameter 0.63, der im wesentlichen durch die Wahl des Verhältnisses $q_d$ für den letzten, den vierten Pilgerschritt d bestimmt ist. Ferner ist der geometrische Mittelwert des Durchmessers der in der Matrix der ersten Zirkoniumlegierung als Sekundärphasen ausgeschiedenen Legierungsbestandteile Eisen und Chrom praktisch unverändert 0.2 µm und in der zweiten Zirkoniumlegierung praktisch unverändert 0.252 µm.

Von den beiden Fertigrohren wird je eine Werkstoffprobe genommen. Beide Werkstoffproben werden zwei Minuten lang bei einer Temperatur von 660 °C geglüht. Danach hat die Zirkoniumlegierung der beiden Werkstoffproben einen Rekristallisationsgrad von 99 %, und der geometrische Mittelwert der Korngröße der Matrix beträgt 2.8 µm.

Beide Fertigrohre werden als mit Kernbrennstoff gefüllte Hüllrohre von Brennstäben eingesetzt und haben eine so hohe Korrosionsfestigkeit, daß sie in einem Druckwasserkernreaktor eine Standzeit von 4 Jahren ohne schadhaft zu werden erreichen, während mit üblichen Rohren aus Zircaloy-4 nur eine Standzeit von 3 Jahren erreicht werden kann.

**Patentansprüche**

1. Strukturteil für ein Kernreaktorbrennelement, insbesondere Hüllrohr für einen mit Kernbrennstoff gefüllten Brennstab oder Abstandhalter für solche Brennstäbe, mit folgenden Merkmalen:

   a) Der Werkstoff des Strukturteiles ist eine Zirkoniumlegierung mit mindestens einem Legierungsbestandteil aus der Gruppe Sauerstoff und Silizium, mit Zinn als Legierungsbestandteil, mit mindestens einem Legierungsbestandteil aus der Gruppe Eisen, Chrom und Nickel und mit einem aus Zirkonium und unvermeidlichen Verunreinigungen bestehenden Rest,

   b) in der Zirkoniumlegierung ist ein Gehalt an Sauerstoff im Bereich von 700 bis 2000 ppm, ein Gehalt an Silizium bis zu 150 ppm, ein Gehalt an Eisen im Bereich von 0.07 bis 0.5 Gew.-%, ein Gehalt an Chrom im Bereich von 0.05 bis 0.35 Gew.-%, ein Gehalt an Nickel bis zu 0.1 Gew.-% und ein Gehalt an Zinn im Bereich von 0.8 bis 1.7 Gew.-% gewählt,

   c) der geometrische Mittelwert des Durchmessers der in der Matrix der Zirkoniumlegierung als Sekundärphasen ausgeschiedenen Legierungsbestandteile aus der Gruppe Eisen, Chrom und Nickel ist im Bereich von 0.1 bis 0.3 $\mu$m gewählt und

   d) der Rekristallisationsgrad der Zirkoniumlegierung ist kleiner oder gleich 10 % und eine Probe der Zirkoniumlegierung hat nach einer Rekristallisationsglühung mit einem Rekristallisationsgrad von 97 ± 2 % einen geometrischen Mittelwert des Korndurchmessers kleiner oder gleich 3 $\mu$m.

2. Strukturteil nach Anspruch 1 mit einem Gehalt nach b) an Eisen im Bereich von 0.07 bis 0.3 Gew.-% und einem Gehalt an Chrom im Bereich von 0.05 bis 0.15 Gew.-% in der Zirkoniumlegierung.

3. Strukturteil nach Anspruch 1 oder 2, mit einer Textur der Zirkoniumlegierung, für deren Kearns-Parameter $f_r$ gilt $0.6 \leq f_r \leq 1$, vorzugsweise $0.6 \leq f_r \leq 0.8$.

4. Strukturteil nach Anspruch 1 oder 2, mit einem Gehalt an Zinn in der Zirkoniumlegierung im Bereich von 0.9 bis 1.1 Gew.-%.

5. Strukturteil nach Anspruch 1 oder 2, mit einem Verhältnis der Gehalte der Legierungsbestandteile Eisen und Chrom in der Zirkoniumlegierung von 2:1 und/oder mit einer Summe der Gehalte dieser beiden Legierungsbestandteile Eisen und Chrom von 0.4 bis 0.6 Gew.-%.

6. Strukturteil nach Anspruch 2 und 5 mit einer Summe der Gehalte der beiden Legierungsbestandteile Eisen und Chrom von 0.4 Gew.-%.

7. Strukturteil nach Anspruch 1 mit einem Gehalt nach b) an Sauerstoff im Bereich von 1000 bis 1800 ppm, an Silizium im Bereich von 80 bis 120 ppm, an Eisen im Bereich von 0.35 bis 0.45 Gew.-%, an Chrom im Bereich von 0.2 bis 0.3 Gew.-% und an Zinn im Bereich 1 bis 1.2 Gew.-%.

8. Verfahren zum Herstellen eines Strukturteils nach Anspruch 1 oder 2 mit folgenden Verfahrensschritten:

   a) ein Ausgangskörper aus der Zirkoniumlegierung wird bis zum Auflösen von ausgeschiedenen Legierungsbestandteilen bei einer Temperatur im $\beta$-Bereich unterhalb der Schmelztemperatur geglüht und anschließend mit einer Abschreckrate an der Körperoberfläche beim Temperaturdurchgang durch den $(\alpha+\beta)$-Bereich von mindestens 30 K/s abgeschreckt,
   b) der Ausgangskörper wird anschließend bis zum Ausbilden der Ausscheidungen der Legierungsbestandteile mit dem geometrischen Mittelwert ($X_A^G$) des Durchmessers dieser Ausscheidungen im Bereich von 0.1 bis 0.3 $\mu$m bei einer ersten Temperatur ($\vartheta_A$) im $\alpha$-Bereich geglüht,
   c) der Ausgangskörper wird bei einer zweiten Temperatur im $\alpha$-Bereich unterhalb der ersten Temperatur warm zu einem Schmiedestück geschmiedet,
   d) das Schmiedestück wird sodann bei einer Temperatur im $\alpha$-Bereich unterhalb der ersten Temperatur entweder warm gewalzt oder warm extrudiert,
   e) das warm gewalzte Schmiedestück wird anschließend in mindestens zwei Walzschritten mit zwischen zwei Walzschritten mit einem Rekristallisationsgrad ($R_x$) im Bereich von 95 % bis 99 % bei einer Glühtemperatur ($\vartheta_R$) im $\alpha$-Bereich durchgeführter Rekristallisationsglühung kalt gewalzt, während das warm extrudierte Schmiedestück in mindestens zwei Pilgerschritten mit zwischen zwei Pilgerschritten mit einem Rekristallisationsgrad ($R_x$) im Bereich von 95 % bis 99 % bei einer Glühtemperatur ($\vartheta_R$) im $\alpha$-Bereich durchgeführter Rekristallisationsglühung kalt gepilgert wird.

9. Verfahren zum Herstellen eines Strukturteils nach Anspruch 1 oder 2 mit folgenden Verfahrensschritten:

    a) ein Ausgangskörper aus der Zirkoniumlegierung wird bis zum Auflösen von ausgeschiedenen Legierungsbestandteilen bei einer Temperatur im β-Bereich unterhalb der Schmelztemperatur geglüht und anschließend mit einer Abschreckrate an der Körperoberfläche beim Temperaturdurchgang durch den (α+β) -Bereich von mindestens 30 K/s abgeschreckt,

    b) der Ausgangskörper wird bei einer ersten Temperatur im α-Bereich warm zu einem Schmiedestück geschmiedet,

    c) das Schmiedestück wird anschließend bis zum Ausbilden der Ausscheidungen der Legierungsbestandteile mit dem geometrischen Mittelwert $(X_A^G)$ des Durchmessers dieser Ausscheidungen im Bereich von 0.1 bis 0.3 μm auf eine zweite Temperatur $(\vartheta_A)$ im α -Bereich oberhalb der ersten Temperatur erhitzt,

    d) das Schmiedestück wird sodann bei einer Temperatur im α-Bereich unterhalb der zweiten Temperatur entweder warm gewalzt oder warm extrudiert,

    e) das warm gewalzte Schmiedestück wird anschließend in mindestens zwei Walzschritten mit zwischen zwei Walzschritten mit einem Rekristallisationsgrad $(R_x)$ im Bereich von 95 % bis 99 % bei einer Glühtemperatur $(\vartheta_R)$ im α -Bereich durchgeführter Rekristallisationsglühung kalt gewalzt, während das warm extrudierte Schmiedestück in mindestens zwei Pilgerschritten mit zwischen zwei Pilgerschritten mit einem Rekristallisationsgrad $(R_x)$ im Bereich von 95 % bis 99 % bei einer Glühtemperatur $(\vartheta_R)$ im α -Bereich durchgeführter Rekristallisationsglühung kalt gepilgert wird.

10. Verfahren nach Anspruch 8 oder 9 mit einem Verfahrensschritt e, bei dem die logarithmische Formänderung (φ) bei den dem letzten Pilgerschritt vorangehenden Pilgerschritten mindestens 1.0 und beim letzten Pilgerschritt mindestens 1.6 beträgt.

11. Verfahren nach Anspruch 8 oder 9 mit einem Verfahrensschritt e, bei dem der Quotient $q = \varepsilon_S / \varepsilon_D$ von logarithmischer Wanddickenänderung $\varepsilon_S$ zu logarithmischer Durchmesseränderung $\varepsilon_D$ bei den dem letzten Pilgerschritt vorangehenden Pilgerschritten mindestens eins und beim letzten Pilgerschritt mindestens fünf ist.

12. Verfahren nach Anspruch 8 oder 9 mit einer dem letzten Walzschritt bzw. dem letzten Pilgerschritt nachfolgenden Abschlußglühung, mit der mit einem Rekristallisationsgrad $(R_x)$ von höchstens 10 % spannungsfrei geglüht wird.

13. Strukturteil nach Anspruch 2 mit Zircaloy-2 als Zirkoniumlegierung.

14. Strukturteil nach Anspruch 2 mit Zircaloy-4 als Zirkoniumlegierung.

**Claims**

1. Structural part for a reactor fuel element, in particular a cladding tube for a fuel rod filled with nuclear fuel or spacers for such fuel rods, having the following features:

    a) the material of the structural part is a zirconium alloy with at least one alloy component of the group oxygen and silicon, with tin as alloy component, having at least one alloy component of the group iron, chromium and nickel and with a remainder consisting of zirconium and unavoidable contaminants,

    b) in the zirconium alloy there is selected a content of oxygen in the range of 700 to 2000 ppm, a content of silicon of up to 150 ppm, a content of iron in the range of 0.07 to 0.5% by weight, a content of chromium in the range of 0.05 to 0.35% by weight, a content of nickel of up to 0.1% by weight and a content of tin in the range of 0.8 to 1.7% by weight,

    c) the geometric mean value of the diameter of the alloy components of the group iron, chromium and nickel, precipitated in the matrix of the zirconium alloy as secondary phases, is selected in the range of 0.1 to 0.3 μm, and

    d) the degree of recrystallization of the zirconium alloy is less than or equal to 10% and a sample of the zirconium alloy has after a recrystallization annealing with a degree of recrystallization of 97 ± 2% a geometric mean value of the grain diameter which is smaller than or equal to 3 μm.

2. Structural part according to claim 1, having a content according to b) of iron in the range of 0.07 to 0.3% by weight and a content of chromium in the range of 0.05 to 0.15% by weight in the zirconium alloy.

3. Structural part according to claim 1 or 2, having a texture of the zirconium alloy, for the Kearns parameter $f_r$ of which applies $0.6 \le f_r \le 1$, preferably $0.6 \le f_r \le 0.8$.

4. Structural part according to claim 1 or 2, having a content of tin in the zirconium alloy in the range of 0.9 to 1.1% by weight.

5. Structural part according to claim 1 or 2, having a ratio of the contents of the alloy components iron and chromium in the zirconium alloy of 2:1 and/or with a sum of the contents of these two alloy components iron and chromium of 0.4 to 0.6% by weight.

6. Structural part according to claim 2 and 5 with a sum of the contents of the two alloy components iron and chromium of 0.4% by weight.

7. Structural part according to claim 1, having a content according to b) of oxygen in the range of 1000 to 1800 ppm, of silicon in the range of 80 to 120 ppm, of iron in the range of 0.35 to 0.45% by weight, of chromium in the range of 0.2 to 0.3% by weight and of tin in the range 1 to 1.2% by weight.

8. Method for the manufacture of a structural part according to claim 1 or 2, having the following procedural steps:

   a) a starting body of the zirconium alloy is annealed until dissolution of precipitated alloy components at a temperature in the $\beta$ range below the melting temperature and is subsequently quenched at a quenching rate at the body surface upon temperature transition through the $(\alpha+\beta)$ range of at least 30 K/s,
   b) the starting body is subsequently annealed until the formation of the precipitates of the alloy components with the geometric mean value $(X_A^G)$ of the diameter of these precipitates in the range of 0.1 to 0.3 $\mu$m at a first temperature $(\vartheta_A)$ in the $\alpha$ range,
   c) the starting body is hot-forged at a second temperature in the $\alpha$ range below the first temperature into a forged part,
   d) the forged part is then either hot-rolled or hot-extruded at a temperature in the $\alpha$ range below the first temperature,
   e) the hot-rolled forged part is subsequently cold-rolled in at least two rolling steps with recrystallization annealing carried out between two rolling steps with a degree of recrystallization $(R_x)$ in the range of 95% to 99% at an annealing temperature $(\vartheta_R)$ in the $\alpha$ range, while the hot-extruded forged part in at least two pilgering steps is cold-pilgered with recrystallization annealing carried out between two pilgering steps with a degree of recrystallization $(R_x)$ in the range of 95% to 99% at an annealing temperature $(\vartheta_R)$ in the $\alpha$ range.

9. Method for the manufacture of a structural part according to claim 1 or 2, having the following procedural steps:

   a) a starting body of the zirconium alloy is annealed until dissolution of precipitated alloy components at a temperature in the $\beta$ range below the melting temperature and is subsequently quenched at a quenching rate at the body surface at temperature transition through the $(\alpha+\beta)$ range of at least 30 K/s,
   b) the starting body is hot-forged at a first temperature in the $\alpha$ range into a forged part,
   c) the forged part is subsequently heated until formation of the precipitates of the alloy components with the geometric mean value $(X_A^G)$ of the diameter of these precipitates in the range of 0.1 to 0.3 $\mu$m to a second temperature $(\vartheta_A)$ in the $\alpha$ range above the first temperature,
   d) the forged part is then either hot-rolled or hot-extruded at a temperature in the $\alpha$ range below the second temperature,
   e) the hot-rolled forged part is subsequently cold-rolled in at least two rolling steps with recrystallization annealing carried out between two rolling steps with a degree of recrystallization $(R_x)$ in the range of 95% to 99% at an annealing temperature $(\vartheta_R)$ in the $\alpha$ range, while the hot-extruded forged part is cold-pilgered in at least two pilgering steps with recrystallization annealing carried out between two pilgering steps with a degree of recrystallization $(R_x)$ in the range of 95% to 99% at an annealing temperature $(\vartheta_R)$ in the $\alpha$ range.

10. Method according to claim 8 or 9 with a procedural step e, where the logarithmic form variation $(\varphi)$ at the pilgering steps preceding the last pilgering step amounts to at least 1.0 and at the last pilgering step at least 1.6.

11. Method according to claim 8 or 9 with a procedural step e, where the quotient $q = \varepsilon_S / \varepsilon_D$ of logarithmic wall thickness variation $\varepsilon_S$ to logarithmic diameter variation $\varepsilon_D$ at the pilgering steps preceding the last pilgering step is at least one and at the last pilgering step is at least five.

12. Method according to claim 8 or 9, having a final annealing following the last rolling step or the last pilgering step, with which final annealing with a degree of recrystallization $(R_x)$ of at most 10% stress-relief-annealing takes place.

13. Structural part according to claim 2 with zircaloy-2 as zirconium alloy.

14. Structural part according to claim 2 with zircaloy-4 as zirconium alloy.

## Revendications

1. Partie de structure d'un assemblage combustible de réacteur nucléaire, notamment gaine pour un crayon combustible rempli de combustible nucléaire ou entretoise pour des crayons combustibles de ce genre, ayant les caractéristiques suivantes :

   a) le matériau de la partie de structure est un alliage de zirconium dont au moins l'un des constituants d'alliage fait partie du groupe constitué de l'oxygène et du silicium, un constituant de l'alliage étant de l'étain, au moins un des constituants de l'alliage faisant partie du groupe constitué du fer, du chrome et du nickel et dont le résidu est constitué de zirconium et d'impuretés inévitables,

   b) dans l'alliage de zirconium, la teneur en oxygène est comprise dans la gamme de 700 à 2000 ppm, la teneur en silicium ne dépasse pas 150 ppm, la teneur en fer est comprise entre 0,07 et 0,5 % en masse, la teneur en chrome est comprise entre 0,05 et 0,35 % en masse, la teneur en nickel est inférieure à 0,1 % en masse et la teneur en étain est comprise entre 0,8 et 1,7 % en masse,

   c) la valeur moyenne géométrique du diamètre du constituant d'alliage qui, dans la matrice de l'alliage de zirconium, est séparée sous la forme d'une phase secondaire et qui fait partie du groupe constitué du fer, du chrome et du nickel est comprise entre 0,1 et 0,3 $\mu$m et

   d) le degré de recristallisation de l'alliage de zirconium est inférieur ou égal à 10 % et un échantillon de l'alliage de zirconium a, après un recuit de recristallisation avec un degré de recristallisation de 97 à plus ou moins 2 %, une valeur moyenne géométrique du diamètre de grain inférieure ou égale à 3 $\mu$m.

2. Partie de structure suivant la revendication 1 ayant une teneur suivant b) en fer dans la gamme de 0,07 à 0,3 % en masse et une teneur en chrome dans la gamme comprise entre 0,05 et 0,15 % en masse dans l'alliage de zirconium.

3. Partie de structure suivant la revendication 1 ou 2, qui comporte une texture de l'alliage de zirconium pour laquelle le paramètre $f_r$ de Kearns vaut $0,6 \leq f_r \leq 1$, de préférence $0,6 \leq f_r \leq 0,8$.

4. Partie de structure suivant la revendication 1 ou 2, qui a une teneur en étain dans l'alliage au zirconium qui est comprise dans la gamme allant de 0,9 à 1,1 % en poids.

5. Partie de structure suivant la revendication 1 ou 2, pour laquelle le rapport des teneurs des constituants d'alliage fer et chrome dans l'alliage de zirconium est de 2 : 1 et/ou dont la somme des teneurs de ces deux constituants d'alliage, fer et chrome, est comprise entre 0,4 et 0,6 % en masse.

6. Partie de structure suivant les revendications 2 et 5, dans laquelle la somme des teneurs en les deux constituants d'alliage fer et chrome est de 0,4 % en masse.

7. Partie de structure suivant la revendication 1, dans laquelle la teneur suivant b) en oxygène est comprise entre 1000 et 1800 ppm, celle en silicium entre 80 et 120ppm, celle en fer entre 0,35 à 0,45 % en masse, celle en chrome entre 0,2 et 0,3 % en masse et celle en étain entre 1 et 1,2 % en masse.

8. Procédé destiné à la fabrication d'une partie de structure suivant la revendication 1 ou 2, comportant les étapes de procédés suivantes :

   a) on soumet à un recuit un corps précurseur en un alliage de zirconium jusqu'à la dissolution de constituants d'alliage précipités à une température dans la phase $\beta$ en dessous du point de fusion, puis on le soumet à une trempe, la vitesse de trempe à la surface du corps lors du passage en température par la phase $\alpha + \beta$ étant d'au moins 30°K/s,

   b) on soumet ensuite le corps précurseur à un recuit à une première température ($V_A$) dans la phase $\alpha$ jusqu'à la formation des précipités des constituants d'alliage, la valeur moyenne géométrique ($X_A{}^G$) du diamètre de ces précipités étant comprise entre 0,1 et 0,3 $\mu$m,

   c) on forge à chaud le corps précurseur en une pièce forgée à une seconde température comprise dans la phase $\alpha$ inférieure à la première température,

   d) la pièce forgée est ensuite soit filée à chaud, soit laminée à chaud à une température comprise dans la phase $\alpha$ inférieure à la première température,

   e) la pièce forgée laminée à chaud est ensuite laminée à froid en au moins deux étapes de laminage comportant un recuit de recristallisation effectué entre deux étapes de laminage avec un degré ($R_x$) de recristallisation compris entre 95 et 99 % à une température ($V_R$) de recuit dans la phase $\alpha$, tandis que la pièce forgée filée à chaud est laminée à pas de pèlerin à froid en au moins deux étapes de laminage à pas de pèlerin qui comporte un recuit de recristallisation effectué entre deux étapes de laminage à pas de pèlerin avec un degré ($R_x$) de recristallisation compris entre 95 et 99 % à une température ($V_R$) de recuit située dans la phase $\alpha$.

**9.** Procédé de fabrication d'une partie de structure suivant la revendication 1 ou 2 ayant les étapes de procédé suivantes :

a) un corps précurseur en un alliage de zirconium est soumis à un recuit jusqu'à la dissolution de constituants d'alliage précipités à une température comprise dans la phase $\beta$ inférieure au point de fusion, puis est soumis à une trempe, la vitesse de trempe à la surface du corps lors du passage en température dans la phase $\alpha + \beta$ étant au moins de 30° K/s,

b) le corps précurseur est ensuite forgé à chaud en une pièce forgée à une première température dans la phase $\alpha$,

c) la pièce forgée est ensuite chauffée jusqu'à la formation des précipités des constituants d'alliage à une seconde température ($V_A$) dans la phase $\alpha$ supérieure à la première température, la valeur moyenne ($X_A{}^G$) géométrique du rayon de ces précipités étant compris entre 0,1 et 0,3 $\mu$m,

d) la pièce forgée est ensuite soit filée à chaud soit laminée à chaud à une température comprise dans la phase $\alpha$ inférieure à la seconde température,

e) la pièce forgée laminée à chaud est ensuite laminée à froid dans au moins deux étapes de laminage comportant un recuit de recristallisation effectué entre deux étapes de laminage avec un degré ($R_x$) de recristallisation compris entre 95 % et 99 % à une température ($V_R$) de recuit située dans la phase $\alpha$, tandis que la pièce forgée filée à chaud est laminée à pas de pèlerin à froid en au moins deux étapes de laminage à pas de pèlerin comportant un recuit de recristallisation effectué entre deux étapes de laminage à pas de pèlerin avec un degré ($R_x$) de recristallisation compris entre 95 et 99 % à une température ($V_R$) de recuit dans la phase $\alpha$.

**10.** Procédé suivant la revendication 8 ou 9 comportant une étape de procédé e, dans laquelle la déformation ($\varphi$) logarithmique lors de l'étape de laminage à pas de pèlerin qui précède la dernière étape de laminage à pas de pèlerin s'élève à au moins 1,0 et à au moins 1,6 lors de la dernière étape de laminage à pas de pèlerin.

**11.** Procédé suivant la revendication 8 ou 9 qui comporte une étape de procédé e, dans laquelle le rapport $q = \varepsilon_S/\varepsilon_D$ de la variation de l'épaisseur de paroi logarithmique $\varepsilon_S$ sur la variation logarithmique du diamètre $\varepsilon_D$ lors de l'étape de laminage à pas de pèlerin qui précède la dernière étape de laminage à pas de pèlerin est au moins égal à 1 et au moins égal à 5 lors de la dernière étape de laminage à pas de pèlerin.

**12.** Procédé suivant la revendication 8 ou 9 comportant un recuit de finition qui suit la dernière étape de laminage ou la dernière étape de laminage à pas de pèlerin, ce recuit ayant lieu libre de toute contrainte avec un degré ($R_x$) de recristallisation de 10 % au maximum.

**13.** Partie de structure suivant la revendication 2 dans laquelle l'alliage en zirconium est le zircaloy 2.

**14.** Partie de structure sur la revendication 2 dans laquelle l'alliage de zirconium est le zircaloy 4.

FIG 1

$$\varphi = \varepsilon_S + \varepsilon_D \qquad q = \varepsilon_S / \varepsilon_D \qquad C_w = 100 \left(1 - \frac{1}{\exp \varphi}\right) \qquad \varepsilon_D = \ln D_o/D \qquad \varepsilon_S = \ln S_o/S$$

FIG 2

EP 0 498 259 B1

FIG 3